(19) Europäisches Patentamt
European Patent Office
Office européen des brevets

(11) **EP 3 536 595 A1**

(12) **EUROPÄISCHE PATENTANMELDUNG**

(43) Veröffentlichungstag:
**11.09.2019   Patentblatt 2019/37**

(51) Int Cl.:
***B62M 6/50*** *(2010.01)*

(21) Anmeldenummer: **19150143.6**

(22) Anmeldetag: **03.01.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.03.2018   DE 102018203361**

(71) Anmelder: **Robert Bosch GmbH
70442 Stuttgart (DE)**

(72) Erfinder: **Marberger, Claus
71263 Weil Der Stadt (DE)**

(54) **VERFAHREN ZUM ANTRIEB EINES ELEKTROFAHRRADS UND STEUERGERÄT**

(57)    Verfahren zum Antrieb eines Elektrofahrrads (100), wobei das Verfahren die folgenden Schritte aufweist: Erfassung einer ersten Sensorgröße, welche eine aktuelle Kadenz eines Fahrers des Elektrofahrrads (100) repräsentiert; Erfassung einer zweiten Sensorgröße, welche eine aktuelle Trittkraft des Fahrers repräsentiert; und Erfassung einer aktuellen Geschwindigkeit des Elektrofahrrads (100), wobei die folgenden Schritte durchgeführt werden: Erfassung einer Eingabe des Fahrers, umfassend eine Sollgeschwindigkeit des Elektrofahrrads (100) und eine Solltrittkraft des Fahrers, und/oder eine Sollkadenz des Fahrers; Anpassung eines Übersetzungsverhältnisses eines elektrisch ansteuerbaren Schaltgetriebes (112) des Elektrofahrrads (100) in Abhängigkeit der erfassten ersten Sensorgröße, der erfassten zweiten Sensorgröße, der Solltrittkraft und/oder der Sollkadenz; und Regelung des Elektromotors (111) in Abhängigkeit der erfassten Geschwindigkeit und der Sollgeschwindigkeit.

## FIG. 1

EP 3 536 595 A1

**Beschreibung**

Die vorliegende Erfindung betrifft ein Verfahren zur Regelung eines Elektromotors als Antriebsmotor und einer Anpassung eines Übersetzungsverhältnisses eines Schaltgetriebes eines Elektrofahrrads. Die Erfindung betrifft auch ein Steuergerät zur Durchführung dieses Verfahrens und ein Elektrofahrrad mit diesem Steuergerät.

Stand der Technik

Beim Antrieb eines Elektrofahrrads wird typischerweise ein Elektromotor zur Unterstützung eines Fahrers in Abhängigkeit eines erfassten Tretdrehmoments des Fahrers angesteuert.

Die Schrift DE 10 2016 209 275 B1 offenbart ein Steuerungsverfahren für einen Elektromotor eines Elektrofahrrads, wobei die Ansteuerung des Elektromotors zusätzlich in Abhängigkeit eines eingelegten Übersetzungsverhältnisses einer Gangschaltung erfolgt. Optional kann dabei eine Ansteuerung der Gangschaltung in Abhängigkeit einer Trittfrequenz beziehungsweise einer Kadenz des Fahrers vorgesehen sein.

Offenbarung der Erfindung

Die vorliegende Erfindung betrifft ein Verfahren zum Antrieb eines Elektrofahrrads. Zunächst wird eine erste Sensorgröße erfasst. Die erste Sensorgröße repräsentiert eine aktuelle Trittfrequenz beziehungsweise Kadenz eines Fahrers des Elektrofahrrads. Vorteilhafterweise wird die Kadenz mittels eines Drehzahlsensors an mindestens einer Kurbel eines Pedals des Elektrofahrrads erfasst. Ferner wird eine zweite Sensorgröße, welche eine aktuelle Trittkraft des Fahrers repräsentiert, erfasst. Vorteilhafterweise wird als zweite Sensorgröße ein Tretdrehmoment an einer Tretachse oder an einem Getriebe des Elektrofahrrads erfasst. Des Weiteren wird eine aktuelle Geschwindigkeit des Elektrofahrrads erfasst. Vorteilhafterweise wird die Erfassung der Geschwindigkeit mit einem Geschwindigkeitssensor, beispielsweise mit einem Reed-Sensor, durchgeführt, welcher eine Rotationsgeschwindigkeit eines Antriebsrades erfasst. In einem weiteren Schritt wird eine Erfassung einer Eingabe des Fahrers durchgeführt. Die Eingabe umfasst zumindest eine Sollgeschwindigkeit des Elektrofahrrads und eine Solltrittkraft des Fahrers und/oder eine Sollkadenz des Fahrers. Anschließend erfolgt eine Anpassung eines Übersetzungsverhältnisses eines elektrisch ansteuerbaren Schaltgetriebes des Elektrofahrrads in Abhängigkeit der erfassten ersten Sensorgröße und/oder der erfassten zweiten Sensorgröße und/oder der Solltrittkraft und/oder der Sollkadenz. Des Weiteren wird eine Regelung des Elektromotors in Abhängigkeit der aktuellen Geschwindigkeit und der Sollgeschwindigkeit durchgeführt. Durch das Verfahren resultiert der Vorteil, dass ein gewünschtes Fahrverhalten des Elektrofahrrads beziehungsweise ein erhöhter Fahrkomfort für den Fahrer erzeugt wird. Des Weiteren wird eine eingegebene körperliche Belastung des Fahrers durch eine automatische Anpassung des Übersetzungsverhältnisses näherungsweise konstant gehalten.

In einer bevorzugten Ausgestaltung erfolgt die Regelung des Elektromotors unabhängig von der erfassten ersten Sensorgröße und der erfassten zweiten Sensorgröße. Dadurch entsteht der Vorteil, dass der Elektromotor unabhängig von Steigungen auf der Fahrstrecke und/oder unabhängig vom dem Fitnesszustand des Fahrers geregelt wird. Beispielsweise wird durch die Regelung eine konstante Geschwindigkeit erzeugt, wodurch der Fahrer eine Fahrradtour gut planen kann, beispielsweise auch über lange Fahrtstrecken oder über eine Fahrtstrecke mit sehr steilen Anstiegen der Fahrtstrecke.

In einer Weiterführung wird die Regelung des Elektromotors stetig zur Einstellung der Sollgeschwindigkeit als aktueller Geschwindigkeit des Elektrofahrrads durchgeführt, wobei die Regelung insbesondere in Abhängigkeit einer vorgegebenen Beschleunigung des Elektrofahrrads erfolgt. Durch diese Weiterführung wird das Verfahren sowohl bei niedrigen als auch bei hohen Geschwindigkeiten entsprechend den Erwartungen des Fahrers und für den Fahrer nachvollziehbar durchgeführt. Es entsteht außerdem ein noch höherer Fahrtkomfort für den Fahrer, beispielsweise auch dann, wenn ein Anhänger, beispielsweise ein Lastanhänger oder ein Kinderanhänger, an das Elektrofahrrad angekoppelt ist.

In einer Ausgestaltung wird durch die Regelung des Elektromotors als aktuelle Geschwindigkeit des Elektrofahrrads die Sollgeschwindigkeit innerhalb einer Toleranz kleiner als 10 % der Sollgeschwindigkeit erzeugt beziehungsweise eingestellt, wobei die maximale Sollgeschwindigkeit insbesondere 25 km/h beträgt. Vorzugsweise ist die Toleranz kleiner als 5 % der Sollgeschwindigkeit und besonders bevorzugt ist die die Toleranz kleiner als 3 % der Sollgeschwindigkeit. Die genaue Einstellung der Sollgeschwindigkeit als aktuelle Geschwindigkeit erhöht vorteilhafterweise den Fahrkomfort für den Fahrer, da ein konstantes und erwartetes Fahrgefühl erzeugt wird.

In einer weiteren Ausgestaltung ist eine Erfassung von Ortskoordinaten des Elektrofahrrads vorgesehen. Die Anpassung des Übersetzungsverhältnisses des elektrisch ansteuerbaren Schaltgetriebes erfolgt in dieser Ausgestaltung zusätzlich in Abhängigkeit der erfassten Ortskoordinaten. Dadurch wird vorteilhafterweise das Übersetzungsverhältnis vorausschauend automatisch angepasst, beispielsweise, wenn sich das Elektrofahrrad vor einem steilen Anstieg oder vor einer Abfahrt auf einer Fahrtstrecke befindet.

In einer Weiterbildung dieser Ausgestaltung wird eine räumliche Orientierung des Elektrofahrrads erfasst, beispielsweise erfolgt dies mittels einer inertialen Messeinheit oder in Abhängigkeit eines zeitlichen Verlaufs der erfassten Ortskoordinaten. Die räumliche Orientierung entspricht insbesondere einer Fahrtrichtung des Elektrofahrrads. In dieser Weiterbildung wird das Übersetzungsverhältnis zusätzlich in Abhängigkeit der erfassten Orientierung angepasst, wodurch die vorausschauende Anpassung des Übersetzungsverhältnisses optimiert wird.

Optional kann es vorgesehen sein, dass ein Puls des Fahrers erfasst wird, beispielsweise wird der Puls mittels einem Brustgurt mit einem Pulssensor oder mittels einer optischen Pulsmessung am Handgelenk erfasst. Mit anderen Worten wird eine mechanische Auswirkung einer durch einen systolischen Blutausstoß vom Herz des Fahrers stammende Druck- und Volumenschwankung des Blutgefäßsystems des Fahrers erfasst. Anschließend wird das Übersetzungsverhältnis zusätzlich in Abhängigkeit des erfassten Pulses angepasst. Vorteilhafterweise wird beispielsweise bei einem hohen Puls, d.h. bei einer Überbelastung des Fahrers, das Übersetzungsverhältnis von der Tretachse zu einem Abtriebzahnrad der Antriebseinheit mit dem Elektromotor erniedrigt. Dadurch entsteht der Vorteil, dass das Verfahren an die körperliche Leistungsfähigkeit des Fahrers angepasst wird beziehungsweise ein optimaler Trainingseffekt durch das Fahren mit dem Elektrofahrrad erzielt wird.

Vorzugsweise wird das Verfahren, insbesondere die Regelung des Elektromotors, durch eine Betätigung des Fahrers beendet. Die Regelung des Elektromotors wird vorteilhafterweise bei einer erfassten Betätigung einer Bremse und/oder bei einer erfassten Betätigung eines Abbruchschalters und/oder in Abhängigkeit der ersten Sensorgröße beziehungsweise der aktuellen Kadenz und/oder in Abhängigkeit der zweiten Sensorgröße beziehungsweise der aktuellen Trittkraft und/oder in Abhängigkeit einer Drehrichtung der Tretachse des Elektrofahrrads beendet, wobei der Elektromotor insbesondere stromlos geschaltet wird.

Die Erfindung betrifft auch ein Steuergerät, welches dazu eingerichtet ist, ein erfindungsgemäßes Verfahren zum Antrieb des Elektrofahrrads durchzuführen.

Die Erfindung betrifft des Weiteren das Elektrofahrrad. Das Elektrofahrrad weist mindestens ein Eingabemittel zur Eingabe der Sollkadenz und/oder der Solltrittkraft und der Sollgeschwindigkeit des Elektrofahrrads auf. Das Eingabemittel kann vorteilhafterweise ein drehbarer Lenkergriff, ein Touchscreen und/oder ein Mikrofon zur Erkennung der Sprache des Fahrers sein, wobei der Touchscreen oder das Mikrofon bevorzugt am Steuergerät angeordnet sind, welches bevorzugt am Lenker des Elektrofahrrads angeordnet ist. Das Elektrofahrrad umfasst ferner den Elektromotor, welcher dazu eingerichtet ist, das Elektrofahrrad anzutreiben. Des Weiteren sind am Elektrofahrrad ein erster Sensor angeordnet, welcher dazu eingerichtet ist, die erste Sensorgröße zu erfassen, und ein zweiter Sensor angeordnet, welcher dazu eingerichtet ist, die zweite Sensorgröße zu erfassen. Darüber hinaus weist das Elektrofahrrad den Geschwindigkeitssensor und das erfindungsgemäße Steuergerät zur Durchführung des erfindungsgemäßen Verfahrens auf.

Ausführungsbeispiele

Weitere Vorteile ergeben sich aus der nachfolgenden Beschreibung von Ausführungsbeispielen mit Bezug zu den Figuren.

Figur 1: Elektrofahrrad

Figur 2: Steuergerät als Blockschaltbild

Figur 3: Ablaufdiagramm des Verfahrens zum Antrieb des Elektrofahrrads

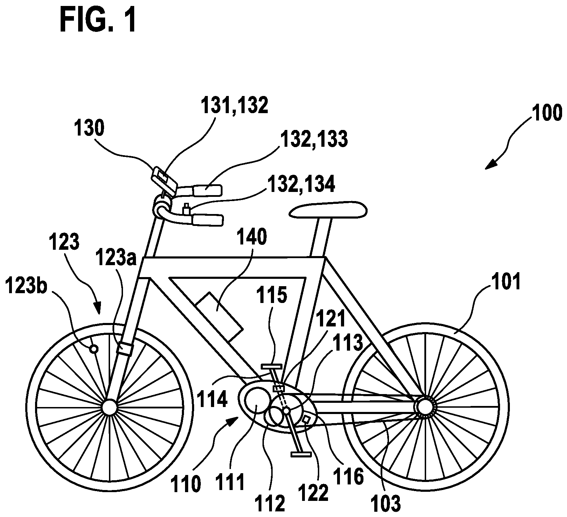

In Figur 1 ist ein Elektrofahrrad 100 dargestellt. Das Elektrofahrrad 100 weist an einer Tretachse 113 des Elektrofahrrads 100 eine Antriebseinheit 110 auf. Die Antriebseinheit 110 umfasst einen Elektromotor 111, ein elektrisch ansteuerbares Schaltgetriebe 112, beispielsweise ein Planetengetriebe 112, und die Tretachse 113. An beiden Enden der Tretachse 113 sind jeweils eine drehfest mit der Tretachse 113 verbundene Kurbel 114 mit einem drehbar an der Kurbel 114 gelagertem Pedal 115 angeordnet, wodurch das Elektrofahrrad 100 dazu eingerichtet ist, Trittkräfte eines Fahrers in ein Fahrerdrehmoment der Tretachse 113 umzuwandeln. Der Elektromotor 111 wird durch ein Steuergerät 130 des Elektrofahrrads 100 angesteuert beziehungsweise geregelt und ist mittels eines Getriebes, beispielsweise des Schaltgetriebes 112, mit der Tretachse 113 verbunden und dazu eingerichtet, ein Motordrehmoment zu erzeugen. Die Antriebseinheit 110 ist dazu eingerichtet, ein Gesamtdrehmoment an einem Abtriebszahnrad 114 der Antriebseinheit 110 zu erzeugen, wobei das Abtriebszahnrad 114 das Gesamtdrehmoment beispielsweise mittels einem Zahnriemen 103 auf ein Antriebsrad 101 des Elektrofahrrads 100 überträgt. Das Gesamtdrehmoment entspricht näherungsweise der Summe aus dem Drehmoment des Fahrers und dem Motordrehmoment. Das elektrisch ansteuerbare Schaltgetriebe 112 ist dazu eingerichtet, ein Übersetzungsverhältnis i zwischen der Tretachse 113 und dem Abtriebszahnrad 114 anzupassen, wobei eine Ansteuerung des Schaltgetriebes 112 mittels des Steuergeräts 130 des Elektrofahrrads 100 erfolgt. Zur Anpassung des Übersetzungsverhältnisses i kann ein zusätzlicher kleiner Schaltmotor in der Antriebseinheit vorgesehen sein, welcher beispielsweise eine Schaltkulisse linear verschiebt. Die Antriebseinheit 110 umfasst ferner einen ersten Sensor 121 zur Erfassung einer ersten Sensorgröße, beispielsweise einen Kadenzsensor 121 zur Erfassung der Kadenz des Fahrers. Der Kadenzsensor 121 ist dazu eingerichtet, eine aktuelle Trittfrequenz des Fahrers beziehungsweise eine aktuelle Kadenz des Fahrers zu erfassen. Die Antriebseinheit umfasst des Weiteren einen zweiten Sensor 122 zur Erfassung einer zweiten Sensorgröße. Der zweite Sensor 122 ist beispielsweise ein Drehmomentsensor 122, welcher dazu eingerichtet ist, das aktuelles Drehmoment $M_{ist}$ des Fahrers als zweite Sensorgröße zu erfassen. Alternativ oder zusätzlich kann als zweite Sensorgröße zumindest eine Trittkraft des Fahrers mittels eines Kraftsensors 122 als zweiter Sensor 122 erfasst werden, wobei der Kraftsensor 122 an einem der Pedale 115 angeordnet ist. Darüber hinaus ist am Elektrofahrrad 100 ein Geschwindigkeitssensor 123 beziehungsweise 123a, 123b angeordnet. Der Geschwindigkeitssensor 123 ist dazu eingerichtet, eine aktuelle Geschwindigkeit $v_{ist}$ des Elektrofahrrads 100 zu erfassen. Der Geschwindigkeitssensor 123 ist beispielsweise ein zweiteiliger Reed-Sensor 123a, 123b und/oder ein Ortsensor 260 für ein globales Satellitennavigationssystem, beispielsweise ein GPS-Sensor, und/oder ein Vibrationssensor und/oder ein Radarsensor und/oder ein Kamerasensor. An dem Elektrofahrrad 100 ist ferner ein Steuergerät 130 mit einem Display 131 angeordnet, wobei das Display 131 einen Touchscreen als Eingabemittel 132 aufweisen kann. Das Steuergerät 130 ist dazu eingerichtet, das elektrisch ansteuerbare Schaltgetriebe 112 anzusteuern und den Elektromotor 111 zu regeln. Als weitere Eingabemittel 132 können mindestens ein drehbarer Lenkergriff 133 und/oder ein Schalter 134 am Lenker angeordnet sein. Zur Stromversorgung der elektrischen Komponenten des Elektrofahrrads 100, beispielsweise des Elektromotors 111, weist das Elektrofahrrad 100 eine Batterie 140 auf. Mittels der Eingabemittel 131, 132, 133 und/oder 134 kann eine Eingabe des Fahrers zur Sollgeschwindigkeit und/oder zur Sollkadenz und/oder zur Solltrittkraft eingegeben werden, wobei insbesondere für die Sollkadenz und/oder die Solltrittkraft für den Fahrer vereinfachte Kategorien bzw. Stufen vorgegeben sind, welche jeweils eine Kombination einer Sollkadenz mit einer Solltrittkraft repräsentieren.

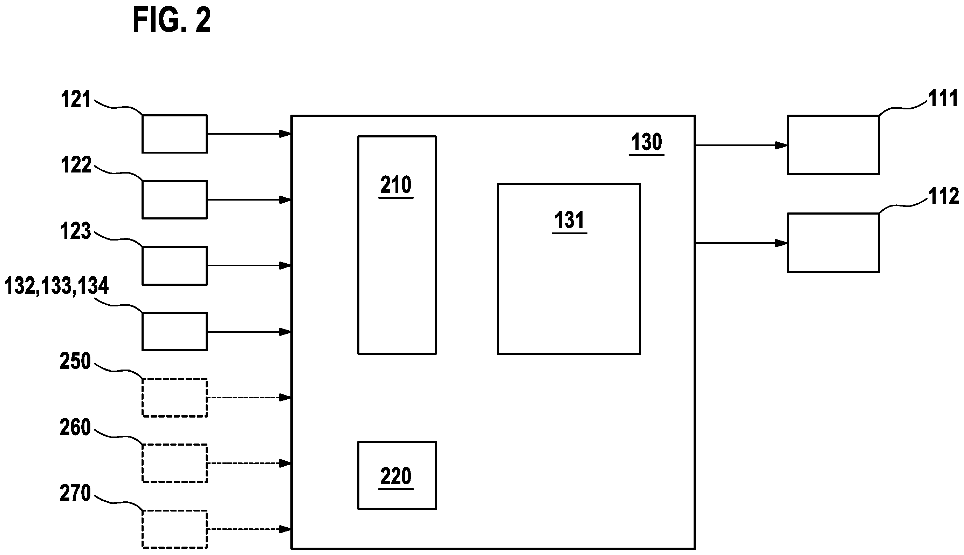

In Figur 2 ist das Steuergerät 130 als schematisches Blockschaltbild dargestellt. Das Steuergerät 130 erfasst die erste Sensorgröße, d.h. die Kadenz, mittels des ersten Sensors 121 und die zweite Sensorgröße, d.h. die Trittkraft, mittels des zweiten Sensors 122. Das Steuergerät 130 erfasst des Weiteren die aktuelle Geschwindigkeit $v_{Ist}$ des Elektrofahrrads 100 mittels des Geschwindigkeitssensors 123. Ferner erfasst das Steuergerät 130 mittels mindestens einem Eingabemittel 132, 133 und/oder 134 eine Eingabe des Fahrers des Elektrofahrrads, wobei die Eingabe die Sollgeschwindigkeit und die Sollkadenz des Fahrers und/oder die Solltrittkraft des Fahrers umfasst. Die Sollgeschwindigkeit und die Sollkadenz des Fahrers und/oder die Solltrittkraft werden somit vom Fahrer vorgegeben, wobei die Eingabe in einem elektronischen Speicher 220 gespeichert sein und, insbesondere zu Beginn einer Fahrt mit dem Elektrofahrrad 100, aus einem elektronischen Speicher 220 ausgelesen werden kann. Optional kann es vorgesehen sein, dass das Steuergerät 130 auch einen Puls des Fahrers mittels eines Pulssensors 250 erfasst. Der Pulssensor 250 kann mittels einer Funkverbindung, beispielsweise einer Bluetooth-Verbindung, mit dem Steuergerät 130 verbunden sein. Darüber hinaus kann es optional vorgesehen sein, dass das Steuergerät 130 Ortskoordinaten des Elektrofahrrads 100 mittels eines Ortssensors 260 für ein globales Satellitennavigationssystem erfasst bzw. ermittelt. Es kann des Weiteren vorgesehen sein, dass das Steuergerät eine Orientierung des Elektrofahrrads 100 mittels einer inertialen Messeinheit 270 erfasst. Der Ortssensor 260 und/oder die inertiale Messeinheit 270 können Komponenten des Steuergeräts 130 sein. Das Steuergerät 130 erzeugt mittels einer Recheneinheit 210 ein erstes Steuersignal, welches dazu eingerichtet ist, den Elektromotor 111 der Antriebseinheit 110 in Abhängigkeit der Eingabe des Fahrers bzw. der Sollgeschwindigkeit und der erfassten Geschwindigkeit zu regeln. Das Steuergerät 130 erzeugt mittels der Recheneinheit 210 ferner ein zweites Steuersignal in Abhängigkeit der erfassten ersten Sensorgröße und/oder zweiten Sensorgröße und/oder des erfassten Pulses und/oder der erfassten Ortskoordinaten und/oder in Abhängigkeit der Eingabe des Fahrers mittels des Eingabemittels 132, d.h. der Sollkadenz und/oder der Solltrittkraft. Das zweite Steuersignal ist dazu eingerichtet, das elektrisch ansteuerbare Schaltgetriebe 112 anzusteuern und somit ein Übersetzungsverhältnis i des Schaltgetriebes 112 anzupassen bzw. zu ändern. Zu diesem Zweck kann das Steuersignal dazu eingerichtet sein, einen Schaltmotor anzusteuern, wobei der Schaltmotor das Übersetzungsverhältnis i des Schaltgetriebes 112 beispielsweise durch lineare Verschiebung einer Schaltkulisse des Schaltgetriebes 112 anpasst. Die Eingabe des Fahrers kann in einem elektronischen Speicher 220 des Steuergeräts 130 gespeichert sein. Das Steuergerät 130 weist des Weiteren ein Display 131 auf, welches einen Touchscreen als Eingabemittel 132 umfassen kann und dazu eingerichtet ist, dem Fahrer beispielsweise die aktuelle Geschwindigkeit, die erste Sensorgröße bzw. aktuelle Kadenz, zweite Sensorgröße bzw. das aktuelle Fahrerdrehmoment und/oder die aktuellen Ortskoordinaten des Elektrofahrrads 100 und/oder die Sollkadenz, die Solltrittkraft und/oder die Sollgeschwindigkeit anzuzeigen. Als alternative oder zusätzliche Eingabemittel 132 können Schalter 134 und/oder drehbare Griffe am Lenker des Elektrofahrrads 100 angeordnet sein. Beispielsweise kann der Fahrer mit einem drehbaren Griff 134 auf der rechten Lenkerseite die Sollgeschwindigkeit und mit einem drehbaren Griff 134 auf der linken Lenkerseite eine Sollleistungsstufe anpassen, wobei die Sollleistungsstufen vorgegebene Kombinationen jeweils aus Solltrittkraft und der Sollkadenz repräsentieren.

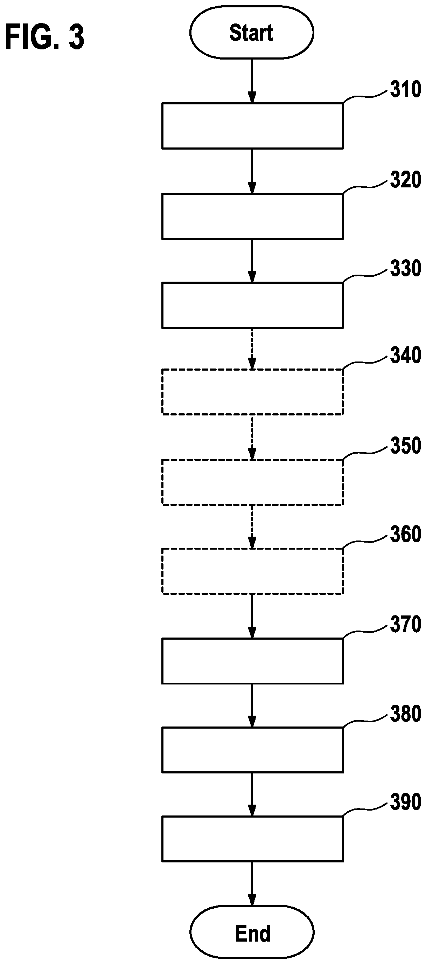

In Figur 3 ist ein Ablaufdiagramm des Verfahrens zum Antrieb des Elektrofahrrads 100 dargestellt. In einem ersten Schritt 310 des Verfahrens wird die erste Sensorgröße erfasst. Die erste Sensorgröße repräsentiert die aktuelle Kadenz des Fahrers. Die zweite Sensorgröße wird in einem zweiten Schritt 330 erfasst, wobei die zweite Sensorgröße die aktuelle Trittkraft des Fahrers repräsentiert. In einem dritten Schritt 330 wird die aktuelle Geschwindigkeit $v_{Ist}$ des Elektrofahrrads 100 erfasst. In weiteren Schritten können eine Erfassung 340 von Ortskoordinaten des Elektrofahrrads 100 und/oder eine Erfassung 350 einer räumlichen Orientierung des Elektrofahrrads 100, insbesondere einer Fahrtrichtung des Elektrofahrrads 100, vorgesehen sein. Zusätzlich kann als optionaler Schritt eine Erfassung 360 eines Pulses des Fahrers vorgesehen sein. Als nächster Schritt wird eine Erfassung 370 einer Eingabe des Fahrers durchgeführt. Die Eingabe umfasst die Sollgeschwindigkeit des Elektrofahrrads 100 und die Sollkadenz und/oder die Solltrittkraft. Die Eingabe der Sollkadenz bzw. einem gewünschten Trittfrequenzbereich des Fahrers und/oder die Eingabe der Solltrittkraft bzw. einem gewünschten Trittkraftbereich des Fahrers kann durch Eingabe der Sollleistungsstufe repräsentiert werden. Alternativ erfolgt die Erfassung 370 der Eingabe des Fahrers automatisch durch Auslesen eines Speichers 220 des Steuergeräts 130. Anschließend wird im Schritt 380 das Übersetzungsverhältnis i des elektrisch ansteuerbaren Schaltgetriebes 112 in Abhängigkeit der erfassten ersten Sensorgröße, der erfassten zweiten Sensorgröße und/oder der Sollkadenz und/oder der Solltrittkraft angepasst. Beispielsweise wird an einer Steigung der Fahrtstrecke bei einer abnehmenden Kadenz (bzw. ersten Sensorgröße) sowie bei einem zunehmenden Fahrerdrehmoment (bzw. zweiten Sensorgröße) das Übersetzungsverhältnis reduziert. Optional erfolgt die Anpassung 380 des Übersetzungsverhältnisses i zusätzlich in Abhängigkeit der erfassten Ortskoordinaten und/oder der erfassten Orientierung und/oder des erfassten Pulses. Eine Regelung 390 des Elektromotors 111 wird in Abhängigkeit der erfassten Geschwindigkeit $v_{Ist}$ und der Sollgeschwindigkeit durchgeführt. Die Regelung 390 des Elektromotors 111 erfolgt vorteilhafterweise unabhängig von der erfassten ersten Sensorgröße und der erfassten zweiten Sensorgröße. Durch die Regelung 390 des Elektromotors 111 wird ferner die aktuelle Geschwindigkeit des Elektrofahrrads 100 vorzugsweise kontinuierlich bis zum Erreichen der Sollgeschwindigkeit angepasst. Bei einer Abweichung von der Sollgeschwindigkeit und/oder der Anpassung 380 des Übersetzungsverhältnisses i wird die Regelung 390 des Elektromotors 111 stetig durchgeführt. Die Anpassung der Geschwindigkeit erfolgt dabei in Abhängigkeit einer vorgegebenen Zeitspanne und/oder in Abhängigkeit einer vorgegebenen Beschleunigung. Als aktuelle Geschwindigkeit $v_{Ist}$ des Elektrofahrrads 100 resultiert die Sollgeschwindigkeit, wobei die Sollgeschwindigkeit durch die Regelung 390 innerhalb einer Toleranz kleiner als 10 % der Sollgeschwindigkeit erzeugt wird. Des Weiteren ist es vorgesehen, dass die Regelung 390 des Elektromotors 111 beendet wird, wenn die erste Sensorgröße einen Abbruchkadenzschwellenwert und/oder die zweite Sensorgröße einen Abbruchkraftschwellenwert unterschreiten, d.h. der Fahrer mit dem Pedalieren aufhört oder sogar ein Drehrichtungswechsel in der Kadenz erfasst bzw. ermittelt wird. Durch das Beenden bzw. einen Abbruch der Regelung 390 rollt das Elektrofahrrad anschließend aus oder es kann einfach mittels einer Bremse des Elektrofahrrads 100 abgebremst werden. Alternativ oder zusätzlich wird die Regelung 390 des Elektromotors 111 bei einer erfassten Betätigung einer Bremse und/oder bei einer erfassten Betätigung eines Abbruchschalters beendet werden. Es ist auch vorgesehen, dass wenn die erste Sensorgröße den Abbruchkadenzschwellenwert und/oder die zweite Sensorgröße den Abbruchkraftschwellenwert überschreiten, das Verfahren wieder fortgeführt wird.

Die Tretleistung $P_{Fahrer}$ eines Radfahrers lässt sich als Produkt der Kadenz K und des Drehmomentes $M_{Fahrer}$ des Radfahrers beschreiben, siehe Gleichung (1). Für den Fahrer können, wie erwähnt, während der Eingabe 370 auswählbare vorgegebene Sollleistungsstufen vorgesehen sein, welche jeweils eine vorgegebene Sollkadenz und/oder eine vorgegebene Solltrittkraft repräsentieren.

$$P_{\text{Fahrer}} = M_{\text{Fahrer}} \cdot K \qquad\qquad (1)$$

Falls bei einer Steigung einer Fahrtstrecke die Kadenz abnimmt und/oder das Drehmoment $M_{Fahrer}$ des Fahrers zunimmt, d.h. die Kadenz von der vorgegebenen Sollkadenz und/oder das Drehmoment von der vorgegebenen Solltrittkraft abweichen, schaltet das Steuergerät im Schritt 380 in ein höheres Übersetzungsverhältnis i des Schaltgetriebes 112. Durch die Anpassung 380 des Übersetzungsverhältnis i wird bei anzunehmender gleichbleibender Fahrerleistung gleichzeitig die Trittfrequenz K erhöht und das Fahrerdrehmoment erniedrigt. Die Trittfrequenz K und das Fahrerdrehmoment werden demnach durch die Anpassung 380 des Übersetzungsverhältnisses i in Abhängigkeit der aktuellen Kadenz und/oder der aktuellen Trittkraft nach Gleichung (2) diskret geändert, wenn kein CVT-Getriebe vorliegt.

$$v_2 = v_1 \quad \Rightarrow \quad K_2 = K_1 \cdot \frac{i_1}{i_2} \qquad\qquad (2)$$

Eine aktuelle Geschwindigkeit $v_{Ist}$ bleibt im Moment der Anpassung 380 des Übersetzungsverhältnisses i allerdings näherungsweise konstant. Ist beispielsweise durch die Regelung 390 des Elektromotors 111 als aktuelle Geschwindigkeit die Sollgeschwindigkeit erzeugt worden, so wird nach der Anpassung 380 des Übersetzungsverhältnisses i die Regelung 390 des Elektromotors 111 bei einer in der Folge resultierenden Geschwindigkeitsänderung stetig durchgeführt. Es resultiert durch das Verfahren demnach ein sehr komfortables Fahrverhalten ohne Motordrehmomentsprünge. Dies gilt insbesondere für das Verfahren bei einem Vergleich zu einer Ansteuerung eines Elektromotors in Abhängigkeit des Fahrerdrehmoments nach dem Stand der Technik.

**Patentansprüche**

1. Verfahren zum Antrieb eines Elektrofahrrads (100), wobei das Verfahren die folgenden Schritte aufweist

   • *Erfassung (310) einer ersten Sensorgröße,* welche eine aktuelle Kadenz eines Fahrers des Elektrofahrrads (100) repräsentiert,
   • *Erfassung (320) einer zweiten Sensorgröße,* welche eine aktuelle Trittkraft des Fahrers repräsentiert, und
   • *Erfassung (330) einer aktuellen Geschwindigkeit ($v_{Ist}$) des Elektrofahrrads (100),*

   **dadurch gekennzeichnet, dass** die folgenden Schritte durchgeführt werden

   • *Erfassung (370) einer Eingabe* des Fahrers, umfassend

      i. eine Sollgeschwindigkeit des Elektrofahrrads (100), und
      ii. eine Solltrittkraft des Fahrers, und/oder
      iii. eine Sollkadenz des Fahrers,

   • *Anpassung (380) eines Übersetzungsverhältnisses (i) eines elektrisch ansteuerbaren Schaltgetriebes (112)* des Elektrofahrrads (100) in Abhängigkeit der erfassten ersten Sensorgröße, der erfassten zweiten Sensorgröße, der Solltrittkraft und/oder der Sollkadenz, und
   • *Regelung (390) des Elektromotors (111)* in Abhängigkeit der erfassten Geschwindigkeit ($v_{Ist}$) und der Sollgeschwindigkeit.

2. Verfahren nach Anspruch 1, **dadurch gekennzeichnet, dass** die Regelung (390) des Elektromotors (111) unabhängig von der erfassten ersten Sensorgröße und der erfassten zweiten Sensorgröße erfolgt.

3. Verfahren nach einem der vorhergehenden Ansprüche, **dadurch gekennzeichnet, dass** die Regelung (390) des Elektromotors (111) zu einer Einstellung der Sollgeschwindigkeit als aktuelle Geschwindigkeit des Elektrofahrrads (100) stetig erfolgt, insbesondere in Abhängigkeit einer vorgegebenen Beschleunigung des Elektrofahrrads (100).

4. Verfahren nach einem der vorhergehenden Ansprüche, **dadurch gekennzeichnet, dass** durch die Regelung (390) des Elektromotors (111) als aktuelle Geschwindigkeit ($v_{Ist}$) des Elektrofahrrads (100) die Sollgeschwindigkeit innerhalb einer Toleranz kleiner als 10 % der Sollgeschwindigkeit eingestellt wird.

5. Verfahren nach einem der vorhergehenden Ansprüche, **dadurch gekennzeichnet, dass** die folgenden Schritte durchgeführt werden

   • *Erfassung (340) von Ortskoordinaten des Elektrofahrrads (100),*
   • Anpassung (380) des Übersetzungsverhältnisses (i) zusätzlich in Abhängigkeit der erfassten Ortskoordinaten.

6. Verfahren nach Anspruch 5, **dadurch gekennzeichnet, dass** die folgenden Schritte durchgeführt werden

   • *Erfassung (350) einer räumlichen Orientierung des Elektrofahrrads,* insbesondere einer Fahrtrichtung des Elektrofahrrads,
   • Anpassung (380) des Übersetzungsverhältnisses (i) zusätzlich in Abhängigkeit der erfassten Orientierung.

7. Verfahren nach einem der vorhergehenden Ansprüche, **dadurch gekennzeichnet, dass** die folgenden Schritte durchgeführt werden

   • *Erfassung (360) eines Pulses des Fahrers,*

• Anpassung (380) des Übersetzungsverhältnisses (i) zusätzlich in Abhängigkeit des erfassten Pulses.

**8.** Verfahren nach einem der vorhergehenden Ansprüche, **dadurch gekennzeichnet, dass** die Regelung (390) des Elektromotors (111) bei einer erfassten Betätigung einer Bremse und/oder bei einer erfassten Betätigung eines Abbruchschalters und/oder in Abhängigkeit der ersten Sensorgröße und/oder in Abhängigkeit der zweiten Sensorgröße und/oder in Abhängigkeit einer Drehrichtung der Tretachse (113) des Elektrofahrrads (100) beendet wird.

**9.** Steuergerät (120), wobei das Steuergerät (120) dazu eingerichtet ist, ein Verfahren zum Antrieb eines Elektrofahrrads (100) nach einem der Ansprüche 1 bis 8 durchzuführen.

**10.** Elektrofahrrad (100) mindestens aufweisend die folgenden Komponenten

• ein Eingabemittel (131, 132, 133, 134) zur Erfassung einer Eingabe des Fahrers, wobei die Eingabe folgende Parameter aufweist

i. eine Sollgeschwindigkeit des Elektrofahrrads (100), und
ii. eine Solltrittkraft des Fahrers, und/oder
iii. eine Sollkadenz des Fahrers,

• einen Elektromotor (111), welcher dazu eingerichtet ist, das Elektrofahrrad (100) anzutreiben,
• einen ersten Sensor (121), welcher dazu eingerichtet ist, eine erste Sensorgröße zu erfassen, welche eine aktuelle Kadenz eines Fahrers des Elektrofahrrads repräsentiert,
• einen zweiten Sensor (122), welcher dazu eingerichtet ist, eine zweite Sensorgröße zu erfassen, welche eine aktuelle Trittkraft des Fahrers repräsentiert,
• einen Geschwindigkeitssensor (123) zur Erfassung einer aktuellen Geschwindigkeit des Elektrofahrrads, und
• ein Steuergerät (130) nach Anspruch 9.

# FIG. 1

# FIG. 2

EP 3 536 595 A1

**FIG. 3**

Europäisches Patentamt
European Patent Office
Office européen des brevets

## EUROPÄISCHER RECHERCHENBERICHT

Nummer der Anmeldung

EP 19 15 0143

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2016 209275 B3 (BOSCH GMBH ROBERT [DE]) 28. September 2017 (2017-09-28) | 9,10 | INV. B62M6/50 |
| A | * Zusammenfassung; Abbildungen * | 1 | |
| | ----- | | |
| X | DE 20 2016 103389 U1 (SHIMANO KK [JP]) 5. Oktober 2016 (2016-10-05) | 9,10 | |
| A | * Zusammenfassung; Abbildungen * | 1 | |
| | ----- | | |
| X | WO 2015/073791 A1 (BOSCH GMBH ROBERT [DE]; DENNER MARCO MICHAEL [DE]; ROCZNIK THOMAS [US]) 21. Mai 2015 (2015-05-21) | 9,10 | |
| A | * Zusammenfassung; Abbildungen * | 1 | |
| | ----- | | |

RECHERCHIERTE SACHGEBIETE (IPC)

B62M

Der vorliegende Recherchenbericht wurde für alle Patentansprüche erstellt

| Recherchenort | Abschlußdatum der Recherche | Prüfer |
|---|---|---|
| Den Haag | 23. Juli 2019 | Wagner, Helmut |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 15 0143

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2019

| Im Recherchenbericht angeführtes Patentdokument | Datum der Veröffentlichung | Mitglied(er) der Patentfamilie | Datum der Veröffentlichung |
|---|---|---|---|
| DE 102016209275 B3 | 28-09-2017 | CN 109153427 A<br>DE 102016209275 B3<br>EP 3464044 A1<br>JP 2019517414 A<br>WO 2017207132 A1 | 04-01-2019<br>28-09-2017<br>10-04-2019<br>24-06-2019<br>07-12-2017 |
| DE 202016103389 U1 | 05-10-2016 | DE 202016103389 U1<br>JP 3199830 U | 05-10-2016<br>10-09-2015 |
| WO 2015073791 A1 | 21-05-2015 | EP 3068683 A1<br>WO 2015073791 A1 | 21-09-2016<br>21-05-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016209275 B1